# EUROPEAN PATENT SPECIFICATION

(11) **EP 2 851 586 B1**
(45) Date of publication and mention of the grant of the patent: **30.11.2016**
(21) Application number: 13185057.0
(22) Date of filing: 18.09.2013
(51) Int. Cl.: F04B 7/00, F04B 49/06, F16H 61/4183, F04B 1/06, F16H 61/431

(54) **Hydraulic transmission**
Hydraulikgetriebe
Transmission hydraulique

(43) Date of publication of application: 25.03.2015
(73) Proprietor: MITSUBISHI HEAVY INDUSTRIES, Ltd., Tokyo 108-8215 (JP)
(72) Inventor: Caldwell, Niall, Loanhead, EH20 9TB (GB)
(74) Representative: Hindle, Alistair Andrew

(56) References cited:
- EP-A1- 2 146 093
- WO-A2-2011/148654
- US-A1- 2012 059 523
- US-A1- 2013 221 676

## Description

### Field of the invention

The invention relates to the field of hydraulic transmissions comprising variable displacement hydraulic pumps and motors having cylinders and electronically controlled valves associated with each cylinder which can be controlled to determine whether each cylinder carries out an active cycle or an inactive cycle on each successive cycle of cylinder working volume.

### Background to the invention

It is known to use a hydraulic transmission with one or more variable displacement hydraulic pumps which provide pressurised hydraulic fluid to drive one or more variable displacement hydraulic motors in apparatus such as wind turbine generators and vehicles. For example, in the case of a wind turbine generator, a variable displacement hydraulic pump may be driven by a drive shaft connected to a rotor which is driven by the wind, and one or more variable displacement hydraulic motors may be connected to one or more electrical generators, and driven by pressurised working fluid from the output of the hydraulic pump. In the case of a vehicle, an internal combustion engine or battery may drive a hydraulic pump and one or more hydraulic motors receive pressurised hydraulic fluid from the pump and drive a respective wheel, or other actuator.

Suitable variable displacement hydraulic pumps and motors include those which comprise a rotating shaft and a plurality of cylinders of cyclically varying working volume, in which the displacement of working fluid through each cylinder is regulated by electronically controllable valves, on each cycle of cylinder working volume, and in phased relationship to cycles of cylinder working volume, to determine the net throughput of working fluid by the machine. For example, EP 0361927 disclosed a method of controlling the net throughput of working fluid through a multi-cylinder pump by opening and/or closing electronically controllable valves, in phased relationship to cycles of cylinder working volume, to regulate fluid communication between individual cylinders of the pump and a low pressure working fluid line. As a result, individual cylinders are selectable by a controller, on each cycle of cylinder working volume, to either displace a predetermined fixed volume of working fluid (an active cycle), or to undergo an inactive cycle (also referred to as an idle cycle) in which there is no net displacement of working fluid, thereby enabling the net throughput of the pump to be matched dynamically to demand. EP 0494236 developed this principle and included electronically controllable poppet valves, which regulate fluid communication between individual cylinders and a high pressure working fluid line, thereby facilitating the provision of a hydraulic motor (which in some embodiments may function as a pump or a motor in alternative operating modes). EP 1537333 introduced the possibility of active cycles in which only part of the maximum displacement of an individual cylinder was selected. US 2012/0059523, in accordance with the preamble of claim 1, discloses such a machine in which the selected displacement doing individual cycles takes into account the suitability of a working chamber to meet the demand.

This type of variable displacement pump and motor can respond quickly to changes in demand and is energy efficient. This type of hydraulic transmission is therefore rapidly controllable and energy efficient.

It may be possible to control the hydraulic pump or motor to damp certain oscillations that may occur in machines including the hydraulic transmission, for example, in a wind turbine, the hydraulic pump or motor might be used to damp oscillations in the edgewise vibration of the blades, or tower or nacelle structural vibration modes. Other oscillations which could be damped include oscillations of shaft speed caused by the torsional dynamics of the drive train (e.g. the drive train connecting the turbine or a wind turbine generator to the hydraulic pump), oscillations of the pump or motor against a torque reaction mounting which retains the pump or motor, or motion of a floating platform in the sea, to which the hydraulic transmission is fitted.

However, it has been found to be difficult to control the hydraulic pump or motor to damp such oscillations due to the inherent properties of variable displacement pump and motors of this type. Indeed, oscillations can in principle occur even with steady state input parameters with machines of such type.

We have determined that these difficulties arise due to delays resulting from the period of time between a change in the requested demand signal (e.g. a torque demand signal), which determines the desired rate of displacement of hydraulic fluid by the hydraulic pump and/or motor, and the hydraulic pump and/or motor displacing fluid to implement the change. This arises from the fact that the displacement by individual cylinders can only be controlled at certain decision points, e.g. once per cycle of cylinder working volume. For example, if a maximum displacement active pumping cycle is to be selected, a decision must be made close to the point of maximum cylinder working volume to close the low pressure valve. There may also be some inherent control delay because, although the time averaged net displacement of working fluid can be selected by the at least one of the pump and the motor to match the demand displacement very accurately over a large number of cycles of cylinder working volume, the actual displacement may differ significantly from the demanded displacement over a small number of cycles of cylinder working volume.

Further, the control delays are variable as they will depend on the speed of rotation of the rotatable shaft (e.g. crankshaft) which drives the cycles of cylinder working volume, as this determines the time between decision points as to whether successive cylinders will be caused to undertake an active or an inactive cycle.

The amplitude response of the hydraulic pump and/or motor also varies with the speed of rotation of the rotatable shaft, because the torque generated by the hydraulic pump and/or motor is proportional to the rate of displacement of working fluid by the hydraulic pump and/or motor (volume per second), which is proportional to the frequency of cycles of cylinder working volume, which is proportional to the speed of rotation of the rotatable shaft.

Accordingly, the invention seeks to provide improved control of hydraulic transmissions including pumps and/or motors of the type described above, to better attenuate oscillations.

### Summary of the invention

According to a first aspect of the present invention there is provided a hydraulic transmission, comprising:
a variable displacement hydraulic pump,
a variable displacement hydraulic motor,
a drive shaft coupled to the hydraulic pump, for driving the hydraulic pump, and
an output shaft coupled to the hydraulic motor, for coupling to a load,
wherein at least one of (and in some embodiments both of) the hydraulic pump and the hydraulic motor comprises:
a rotatable shaft,
a shaft sensor which measures the position or speed of rotation of the rotatable shaft,
at least one cam having at least one lobe,
a plurality of cylinders having working volumes which vary cyclically with rotation of the rotatable shaft,
a low pressure working fluid line and a high pressure working fluid line,
a plurality of valves regulating the flow of working fluid between each cylinder and the low and high pressure working fluid lines, at least one said valve associated with each cylinder being an electronically controlled valve, and
wherein the hydraulic transmission comprises control means (e.g. one or more controllers), the control means comprising:
   a demand compensation module having a requested demand input receiving a requested demand signal and outputting a displacement demand signal;
   a valve signal generation module having a displacement demand input receiving the displacement demand signal from the demand compensation module and configured to generate command signals to actively control the said electronically controlled valves to thereby determine the net displacement of working fluid by each cylinder on each cycle of cylinder volume and cause the time averaged net displacement to match the demand indicated by the displacement demand signal;
   a damping signal generation module configured to calculate a damping signal calculated to damp one or more oscillations;
   wherein the demand compensation module processes the requested demand signal and the damping signal to calculate the displacement demand signal; and
   wherein the damping signal generation module calculates the damping signal taking into account the frequency of the one or more oscillations and the speed of rotation of the rotatable shaft to thereby compensate for variations in the amplitude and phase of the response of the net displacement by the said cylinders to the displacement demand signal with the frequency of the one or more oscillations and the speed of rotation of the rotatable shaft.

One or more said oscillations may be oscillations in the speed of the rotatable shaft or of components fixedly mounted to the rotatable shaft. The oscillations may be oscillations in the torque of the rotatable shaft. Accordingly, the damping signal may be calculated by processing the speed of rotation of the rotatable shaft. For example, the oscillations may be oscillations of the speed of rotation of the rotatable shaft, for example those caused by the torsional dynamics of the drive train (e.g. the coupling between the hydraulic pump and the rotating hub of a wind turbine, or the coupling between the hydraulic motor and an electrical generator).

One or more said oscillations may be oscillations in the pressure in the high pressure working fluid line. Accordingly, the damping signal may be calculated by processing a received pressure signal indicative of the pressure in the rotatable shaft. The oscillations may, for example, be oscillations of working fluid in the hydraulic circuit which comprises the high and low pressure working fluid lines, and the variable displacement pump and the variable displacement motor.

One or more said oscillations may be oscillations of components in mechanical communication with (e.g. mechanically coupled to) the hydraulic transmission, for example, components of a machine (for example a wind turbine generator, or a vehicle) comprising the hydraulic transmission. The damping signal may be calculated by processing a received signal sensitive to the oscillations, for example a signal received from an accelerometer mounted on an oscillating component (e.g. on the blade of wind turbine generator, or the tower of a wind turbine generator, or the base of a floating platform).

Other examples of relevant oscillations includes edgewise vibrations of a wind turbine generator blade, tower or nacelle structural vibrations modes of a wind turbine generator, oscillations of the hydraulic pump or hydraulic motor against torque reaction mounts, motion of a floating platform to which the hydraulic transmission is fixed, and so forth.

Accordingly, the invention takes into account the time delays in implementing the specified net displacement of working fluid by the cylinders. These time delays typically result as the net displacement of working fluid displaced by a cylinder may only be controlled during a limited part or parts of each cycle of cylinder working volume. For example, in a pumping cycle, a decision needs to be made at around bottom dead centre whether to close the low pressure valve and carry out an active cycle with a net displacement of working fluid or to hold the low pressure valve open and carry out an idle cycle with no net displacement of working fluid.

Furthermore, there may be some inherent control delay because, although the time averaged net displacement of working fluid can be selected by the at least one of the pump and the motor to match the demand displacement very accurately over a large number of cycles of cylinder working volume, the actual displacement may differ significantly from the demanded displacement over a small number of cycles of cylinder working volume. The various processing steps take into account the units in which each signal is expressed.

The requested demand represented by the requested demand signal may, for example, be a value indicative of a rate of displacement per unit time (e.g. volume of working fluid per second) or rate of displacement per rotation of the rotatable shaft (e.g. volume of working fluid per rotation), or a value indicative of torque (torque demand). Rate of displacement per unit time is the product of the rate of displacement per rotation of the rotatable shaft and the speed of rotation of the rotatable shaft. Torque is proportional to the rate of displacement (volume per unit time) and to the pressure in the high pressure manifold. In any event, the requested demand represented by the requested demand signal can be specified in any suitable units and in some embodiments it is specified as a fraction of a maximum value, e.g. volume of working fluid to be displaced per rotation of the rotatable shaft as a fraction of the maximum possible volume of working fluid to be displaced per rotation of the rotatable shaft.

The displacement demand signal may be expressed in units related to (e.g. proportional to) the volume of working fluid to be displaced by the pump and/or motor per second. The valve signal generation module typically takes into account the speed of rotation of the rotatable shaft when generating the command signals. This is because the actual net displacement of working fluid depends on the usable volume of each cylinder, the proportion of the usable volume of each cylinder which is displaced during each cycle of cylinder volume and the rate of cycles of cylinder working volume, which is proportional to the speed of rotation of the rotatable shaft. However, in some embodiments, the displacement demand signal is expressed in units related to (e.g. proportional to) the fraction of the maximum displacement of the pump and/or motor at the current speed of rotation of the rotatable shaft. In this case, the demand compensation module may take into account the speed of rotation of the rotatable shaft when processing the compensated torque signal and the pressure signal to determine the displacement demand signal.

The speed of rotation of the rotatable shaft may be measured, for example, the speed of rotation may be measured by the shaft sensor, or obtained by processing signals from the shaft sensor. Accordingly, a shaft speed signal representative of the speed of rotation of the rotatable shaft may be received. However, the speed of rotation of the rotatable shaft may also be calculated or controlled.

It may be that the demand compensation module processes the received demand signal using a feedforward filter.

The feedforward filter may attenuate components of one or more signals (e.g. the received demand signal and/or the pressure signal) within one or more frequency bands.

Thus, the feedforward filter typically comprises one or more band reject filters (e.g. notch filters). The demand compensation module can thereby attenuate undesirable frequencies, for example frequencies corresponding to resonant frequencies of components in mechanical communication with (e.g. mechanically coupled to) the hydraulic transmission, such as resonant frequencies of a drive shaft, wind turbine blades etc. Typically, some or all of the frequency ranges which are attenuated do not vary with the speed of rotation of the rotatable shaft.

It may be that the processing of the received demand signal which depends on the received shaft speed signal takes into account the variation in the delay between a change in the displacement demand signal and the resulting displacement of working fluid by the said at least one of the hydraulic pump and the hydraulic motor with the speed of rotation of the rotatable shaft.

In practice there is a delay between active control of electronically controlled valves (which typically takes place near bottom dead centre or top dead centre) and the resulting displacement of working fluid (which reaches a maximum between bottom dead centre and top dead centre). Accordingly, this delay, and the variation in delay with the speed of rotation of the rotatable shaft can be taken into account. The delay is typically inversely proportional to the speed of rotation of the rotatable shaft.

It may be that the processing of the demand signal taking into account the speed of rotation of the rotatable shaft further takes into account the variation in the magnitude of the torque response of the at least one of the hydraulic pump and the hydraulic motor to a given change in displacement demand signal, with speed of rotation of the rotatable shaft and/or the pressure represented by the pressure signal.

The magnitude of the torque response may vary with the speed of rotation of the rotatable shaft and so preferably both variation in the delay and magnitude of the torque response of the pump and/or motor to changes in displacement demand signal are taken into account.

The demand compensation module may filter a signal which is responsive to one or more (or all) of the said oscillations to determine the damping signal, using a filter, for example using a feedback filter.

The signal which is responsive to the said oscillations may, for example, be the pressure in the high pressure working fluid line, or the torque in, or speed of rotation of the rotatable shaft.

The damping signal (e.g. damping torque) may be added to the requested demand signal, or a value (e.g. torque value) obtained by processing the requested demand signal (e.g. torque demand signal) using a feedforward filter.

The said filter (typically a feedback filter) may comprise a band pass filter.

In general, the filtering of the signal which is responsive to the said oscillations typically filters out low frequencies, where damping is not practical and/or filters out high frequencies, above which the delay in response of the net displacement of working fluid to the displacement demand signal is too great to adequately damp.

It may be that the filtering of the signal which is responsive to the said oscillations is carried out by a filter (e.g. a feedback filter) which has a phase lead (which may be frequency dependent) which is variable, depending on the speed of rotation of the rotatable shaft. Phase lead may be positive or negative.

The said filter (e.g. a feedback filter) may also have an amplitude response which is variable, depending on the speed of rotation of the rotatable shaft. The amplitude response of the said filter may have a maxima of gain at a frequency or range of frequencies which varies with the speed of rotation of the rotatable shaft. The amplitude response of the said filter may have constant gain at a frequency or range of frequencies which varies with the speed of rotation of the rotatable shaft. The gain of the said filter may be a function of the displacement demand signal which tends to zero at high and/or low frequencies and may have substantially constant gain therebetween. The frequency below which the gain decreases or the frequency above which the gain decreases may vary with the speed of rotation of the rotatable shaft.

The phase lead of said filter (e.g. feedback filter) may be frequency dependent. Accordingly, the phase lead applied by said filter to a signal of a given frequency may vary dependent on both the frequency of the signal and the speed of rotation of the rotatable shaft.

It may be that one or more said oscillations are oscillations in a component which is coupled to the rotatable shaft and the signal responsive to the said oscillations is representative of the speed of rotation of the rotatable shaft.

It may be that one or more said oscillations are oscillations in a component of a machine to which the hydraulic transmission is mounted and the signal responsive to said oscillations is a signal received from a sensor which is sensitive to the said oscillations.

For example, one or more said oscillations may be oscillations in the blades of a wind turbine generator and the sensor may be a strain gauge which measures flexing of the blades. One or more said oscillations may be oscillations in the tower of a wind turbine generator and the sensor may be an accelerometer which measures movement of the tower. Thus, the sensor may for example be a strain gauge, or an accelerometer.

The requested demand signal may be a torque demand signal which is representative of a desired torque in the rotatable shaft or a component coupled to the rotatable shaft. For example, where the hydraulic transmission is part of a wind turbine generator, and the at least one of the hydraulic pump and the hydraulic motor is the hydraulic pump, the torque demand signal might be representative of a desired torque in the drive shaft of a wind turbine. Where the hydraulic transmission is part of a vehicle and the at least one of the hydraulic pump and the hydraulic motor is a hydraulic motor, the torque demand signal might be representative of a desired torque in a load coupled to the output shaft of the hydraulic motor, for example the torque applied to a wheel of the vehicle.

Where the requested demand signal is a torque demand signal, the demand compensation module typically processes the torque demand signal to obtain a compensated torque signal which is calculated taking into account the frequency of the one or more oscillations and the speed of rotation of the rotatable shaft to thereby compensate for variations in the amplitude and phase of the response of the net displacement by the said cylinders to the displacement demand signal with the frequency of the one or more oscillations and the speed of rotation of the rotatable shaft. In this case, the damping signal is a torque damping signal calculated taking into account the frequency of the one or more oscillations and the speed of rotation of the rotatable shaft to thereby compensate for variations in the amplitude and phase of the response of the net displacement by the said cylinders to the displacement demand signal with the frequency of the one or more oscillations and the speed of rotation of the rotatable shaft. The processing of the torque demand signal to obtain a compensated torque signal typically comprises adding the torque damping signal to the torque demand signal.

The demand compensation module typically comprises a pressure input receiving a pressure signal indicative of the pressure in the high pressure working fluid line. The displacement demand signal may be calculated by processing the compensated torque and the pressure signal, for example by dividing the torque represented by the compensated torque signal by the pressure represented by the pressure signal.

It may be that by default the requested demand signal is not processed taking into account a said damping signal. In that case it may be that the requested demand signal and the damping signal are processed to calculate the displacement demand signal responsive to detection of one or more oscillations.

Typically, the control means determines for each cycle of cylinder working volume whether the respective cylinder should undergo an active cycle, in which there is a net displacement of working fluid by the cylinder (i.e. the determined net displacement is greater than zero) or an inactive cycle in which there is no net displacement of working fluid (i.e. the determined net displacement is zero). Typically, the control means determines that at least when the said at least one of the hydraulic pump or the hydraulic motor is working at less than maximum possible displacement per revolution of the rotatable shaft, at least some cycles of cylinder working volume are inactive cycles. Typically, for at least a range of displacement demands (values of the displacement represented by the displacement demand signal), the control means determines there should be only inactive cycles or active cycles during each of which the same net displacement is determined. Typically, for at least a range of displacement demands, the control means determines there should be only inactive cycles or active cycles during each of which the maximum net displacement of working fluid by a cylinder is determined. In some embodiments, during at least some active cycles, the control means determines that a cylinder should make a net displacement which is a fraction (i.e. a proportion which is greater than 0 but less than 1) of the maximum net displacement by a cylinder during that active cycle. Typically, the control means only determines that a cylinder should make a net displacement which is a fraction of the maximum net displacement by a cylinder during an active cycle when the displacement demand is below a threshold which is less than the maximum displacement of the said at least one of the hydraulic pump and the hydraulic motor. Typically, where the control means determines that a cylinder should undergo an active cycle in which it makes a net displacement which is a fraction of the maximum net displacement by a cylinder during an active cycle (for example, when the displacement demand is within a predetermined range), active cycles in which a cylinder undergoes an active cycle in which it makes a net displacement which is a fraction of the maximum net displacement by a cylinder during an active cycle are interspersed with at least some inactive cycles or at least some active cycles in which the maximum net displacement by a cylinder during an active cycle is selected. There may be a range of values of the displacement demand at which inactive cycles, active cycles in which the maximum net displacement by a cylinder and active cycles in which a fraction of the maximum net displacement are interspersed.

The invention extends in a second aspect to a wind turbine generator comprising a hydraulic transmission according to the first aspect of the invention, a wind turbine rotor coupled to the drive shaft of the hydraulic pump and an electricity generator coupled to the output shaft of the hydraulic motor.

The invention also extends in a third aspect to a vehicle comprising a hydraulic transmission according to the first aspect of the invention, an engine coupled to the drive shaft of the hydraulic pump and an actuator (e.g. a wheel) coupled to the output shaft of the hydraulic motor.

Where the at least one of the hydraulic pump and the hydraulic motor is the hydraulic pump, the rotatable shaft typically is, or is coupled to, the said drive shaft. Where the at least one of the hydraulic pump and the hydraulic motor is the hydraulic motor, the rotatable shaft typically is, or is coupled to, the said output shaft.

The invention extends in a fourth aspect to a method of controlling at least one of a hydraulic pump or a hydraulic motor in a hydraulic transmission, the hydraulic transmission, comprising:
a variable displacement hydraulic pump,
a variable displacement hydraulic motor,
a drive shaft coupled to the hydraulic pump, for driving the hydraulic pump, and
an output shaft coupled to the hydraulic motor, for coupling to a load,
wherein at least one of the hydraulic pump and the hydraulic motor comprises:
a rotatable shaft,
a shaft sensor which measures the position or speed of rotation of the rotatable shaft,
at least one cam having at least one lobe,
a plurality of cylinders having working volumes which vary cyclically with rotation of the rotatable shaft,
   a low pressure working fluid line and a high pressure working fluid line,
a plurality of valves regulating the flow of working fluid between each cylinder and the low and high pressure working fluid lines, at least one said valve associated with each cylinder being an electronically controlled valve,
the method comprising:
   receiving a requested demand signal and a shaft speed signal indicative of the speed of rotation of the rotatable shaft;
   calculating a damping signal calculated to damp one or more oscillations;
   processing the requested demand signal and the damping signal to calculate a displacement demand signal and
   actively controlling the said electronically controlled valves to thereby determine the net displacement of working fluid by each cylinder on each cycle of cylinder volume and cause the time averaged net displacement to match the displacement of working fluid indicated by the displacement demand signal,
   wherein the damping signal is calculated taking into account the frequency of the one or more oscillations and the speed of rotation of the rotatable shaft to thereby compensate for variations in the amplitude and phase of the response of the net displacement by the said cylinders to the displacement demand signal with the frequency of the one or more oscillations and the speed of rotation of the rotatable shaft.

One or more said oscillations may be oscillations in the speed of the rotatable shaft or of components fixedly mounted to the rotatable shaft. One or more said oscillations may be oscillations in the torque in the rotatable shaft. Accordingly, the damping signal may be calculated by processing the speed of rotation of the rotatable shaft. For example, one or more said oscillations may be oscillations of the speed of rotation of the rotatable shaft, for example those caused by the torsional dynamics of the drive train.

One or more said oscillations may be oscillations in the pressure in the high pressure working fluid line. Accordingly, the damping signal may be calculated by processing a received pressure signal indicative of the pressure in the rotatable shaft. The oscillations may, for example, be oscillations of working fluid in the hydraulic circuit which comprises the high and low pressure working fluid lines, and the variable displacement pump and the variable displacement motor.

One or more said oscillations may be oscillations of components in mechanical communication with (e.g. mechanically coupled to) the hydraulic transmission, for example, components of a machine (for example a wind turbine generator, or a vehicle) comprising the hydraulic transmission. The damping signal may be calculated by processing a received signal sensitive to one or more (or all) of the said oscillations, for example a signal received from an accelerometer mounted on an oscillating component (e.g. on the blade of wind turbine generator, or the tower of a wind turbine generator, or the base of a floating platform).

The requested demand represented by the requested demand signal may, for example, be a value indicative of a rate of displacement per unit time (e.g. volume of working fluid per second) or rate of displacement per rotation of the rotatable shaft (e.g. volume of working fluid per rotation), or a value indicative of torque (torque demand). Rate of displacement per unit time is the product of the rate of displacement per rotation of the rotatable shaft and the speed of rotation of the rotatable shaft. Torque is proportional to the rate of displacement (volume per unit time) and to the pressure in the high pressure manifold. In any event, the requested demand represented by the requested demand signal can be specified in any suitable units and in some embodiments it is specified as a fraction of a maximum value, e.g. volume of working fluid to be displaced per rotation of the rotatable shaft as a fraction of the maximum possible volume of working fluid to be displaced per rotation of the rotatable shaft.

The method may comprise receiving a pressure signal indicative of the pressure in the high pressure working fluid line.

It may be that the requested demand signal is a torque demand signal. The method may comprise processing the torque demand signal and the damping signal to obtain a compensated torque signal. The compensated torque signal and the pressure signal may be processed to calculate the displacement demand signal.

Processing the compensated torque signal and the pressure signal to determine the displacement demand signal may comprise dividing the torque represented by the compensated torque signal by the pressure represented by the pressure signal.

The step of processing the received demand signal may be carried out by a demand compensation module. The electronically controlled valves may be controlled by a valve signal generation module, responsive to the displacement demand signal.

It may be that by default the requested demand signal is not processed taking into account a said damping signal. In that case it may be that the requested demand signal and the damping signal are processed to calculate the displacement demand signal responsive to detection of one or more oscillations.

The received demand signal may be processed using a feedforward filter, which may attenuate components of one or more signals (e.g. the received demand signal and/or the pressure signal) within one or more frequency bands. It may be that some or all of the said frequency bands do not vary with the speed of rotation of the rotatable shaft.

The processing of the received demand signal which depends on the received shaft speed signal may take into account the variation in the delay between a change in the displacement demand signal and the resulting displacement of working fluid by the said at least one of the hydraulic pump and the hydraulic motor with the speed of rotation of the rotatable shaft.

It may be that the processing of the received demand signal which depends on the received shaft speed signal further takes into account the variation in the magnitude of the torque response of the at least one of the hydraulic pump and the hydraulic motor to a given change in displacement demand signal, with speed of rotation of the rotatable shaft and/or the pressure represented by the pressure signal.

The magnitude of the torque response may vary with the speed of rotation of the rotatable shaft and so preferably both variation in the delay and magnitude of the torque response of the pump and/or motor to changes in displacement demand signal are taken into account.

It may be that the step of calculating the damping signal comprises filtering a signal which is responsive to the said oscillations. Where the received demand signal is a torque signal, the method may comprise calculating a damping torque by filtering a signal which is responsive to the said oscillations.

The signal which is responsive to the said oscillations may, for example, be the pressure in the high pressure working fluid line, or the torque in, or speed of rotation of the rotatable shaft. The signal which is responsive to the said oscillations may be a signal received from a sensor which measures the oscillation, for example, a signal from an accelerometer or strain gauge which measures an oscillating movement or strain.

The damping signal (e.g. damping torque) may be added to the requested demand signal, or a value (e.g. torque value) obtained by processing the requested demand signal (e.g. torque demand signal) using a feedforward filter.

The step of filtering the signal which is responsive to said oscillations may comprise filtering the signal with a band pass filter. The filtering of the signal which is responsive to the said oscillations may comprise applying a phase lead which is variable, depending on the speed of rotation of the rotatable shaft. The filtering of the signal which is responsive to the said oscillations may comprise applying a gain which is variable, depending on the speed of rotation of the rotatable shaft. The said phase lead may be frequency dependent (dependent on the frequency of the one or more oscillations). Accordingly, the said phase lead vary dependent on both the frequency of the signal and the speed of rotation of the rotatable shaft.

It may be that the said oscillations are oscillations in a component which is coupled to the rotatable shaft and the signal responsive to the said oscillations is a signal representative of the speed of rotation of the rotatable shaft. The said oscillations may be oscillations in a component of a machine to which the hydraulic transmission is mounted and the signal responsive to said oscillations is a signal received from a sensor which is sensitive to the said oscillations.

For example, one or more said oscillations may be oscillations in the blades of a wind turbine generator and the sensor may be a strain gauge which measures flexing of the blades. One or more said oscillations may be oscillations in the tower of a wind turbine generator and the sensor may be an accelerometer which measured movement of the tower. Thus, the sensor may for example be a strain gauge, or an accelerometer.

Further features of the method of the fourth aspect of the invention correspond to those set out in respect of the first aspect of the invention.

### Description of the Drawings

An example embodiment of the present invention will now be illustrated with reference to the following Figures in which:
Figure 1 is a schematic diagram of a wind turbine generator according to the invention;
Figure 2 is a schematic diagram of a hydraulic pump according to the invention;
Figure 3 is a schematic diagram of the controller of the hydraulic pump;
Figure 4 is a flow diagram of the operation of the transmission controller;
Figure 5 is a flow diagram of a displacement determination algorithm for determining the displacement by individual cylinders;
Figures 6A and 6B are tables illustrating repetitive execution of the algorithm;
Figure 7 is a schematic diagram of the hydraulic pump displacement control;
Figure 8 is graph of suitable phase lead versus command signal frequency at different speeds of rotation; and
Figure 9 is a graph of suitable gain by the amplifier versus command signal frequency at different speeds of rotation.

### Detailed Description of an Example Embodiment

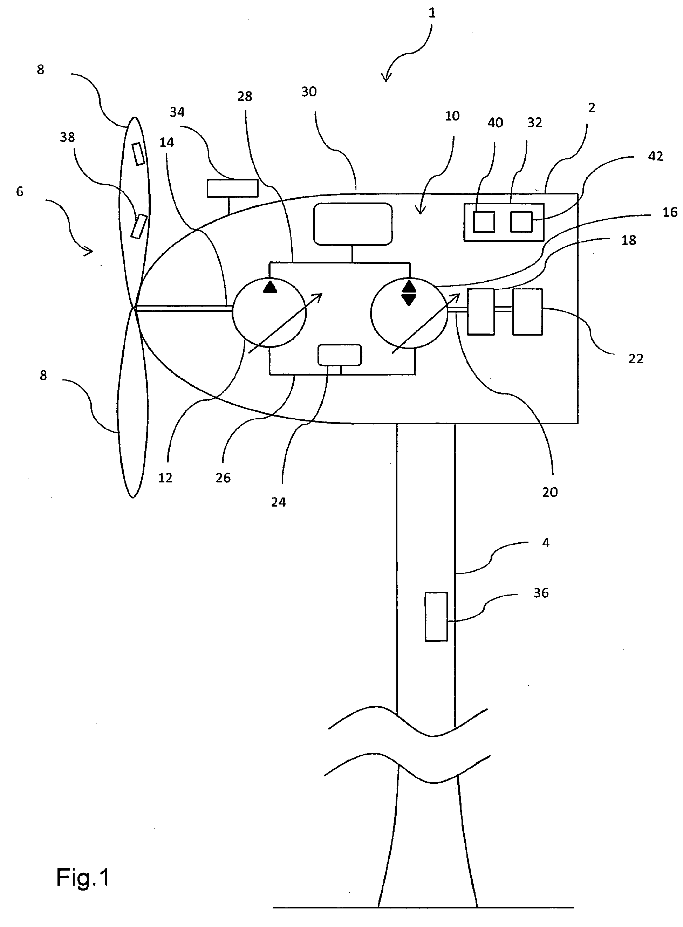

With reference to Figure 1, a wind turbine generator 1 comprises a nacelle 2, supported by a tower 4 and having a turbine 6, with a plurality of blades 8 mounted thereon.

The nacelle houses a hydraulic transmission, shown generally as 10, which comprises a hydraulic pump 12, which has the rotatable shaft that is coupled to the turbine through a drive shaft 14. The transmission also includes a hydraulic motor 16 which has the rotatable shaft that is coupled to an electricity generator 18 through a generator drive shaft 20. The electricity generator is in turn coupled to an electricity grid through a contactor 22.

Within the hydraulic transmission, oil, functioning as working fluid, is supplied from a tank 24 to the input side of the hydraulic pump through low pressure working fluid line 26. Pressurised oil is delivered from an output side of the hydraulic pump to the input side of the hydraulic motor through high pressure working fluid line 28 which is in communication with an oleo pneumatic accumulator 30.

The nacelle also houses a transmission controller 32, which controls the hydraulic transmission by sending control signals to the hydraulic pump and motor, to regulate the displacement of the hydraulic pump and the hydraulic motor. The control signals (the displacement demand signals) request displacement by the pump and motor, expressed as a fraction of maximum displacement. The absolute volume of the displacement (volume of working fluid per second) will be the product of the fraction of maximum displacement, the maximum volume which can be displaced per revolution of the rotatable shaft of the pump or motor and the rate of revolution of the rotatable shaft or motor (revolution per second). This way, the controller can regulate the torque applied through the drive shaft 14, which is proportional to the displacement (volume per second) of the hydraulic pump, and the pressure in the high pressure working fluid line. The controller can also regulate the rate of electricity generation, which depends on the displacement (volume per second) of the hydraulic motor, and the pressure in the high pressure working fluid line. The pressure in the high pressure working fluid line increases when the hydraulic pump displaces oil at a higher displacement (volume per second) than the hydraulic motor, and decreases when the hydraulic motor displaces oil at a lower displacement (volume per second) than the hydraulic pump. The oleo-pneumatic accumulator allows the volume of working fluid in the high pressure side to be varied. In alternative embodiments a plurality of hydraulic pumps and/or a plurality of hydraulic motors are in fluid communication with the high pressure fluid line and so the displacement of each must be considered.

The controller receives, as inputs, signals including the speed of rotation of the rotatable shafts of the pump and motor, and a measurement of the pressure in the high pressure working fluid line. It may also receive a wind speed signal from an anemometer 34, information from the electricity grid, control signals (such as commands to start up or stop, or to increase or decrease high pressure working fluid line pressure in advance of a gust of wind), or other data as required.

The controller also considers resonances within the wind turbine generator, such as resonances in the tower, which can be measured using an accelerometer 36, located in the tower or the nacelle, and vibrations in the turbine blades, which can be measured using an accelerometer 38 mounted on one of the blades.

For the purposes of this example, the control means comprises a transmission controller 32 comprising a processor 40, in electronic communication with data storage 42, comprising a tangible computer readable medium, such as solid state memory, which stores the programme, and data required during operation. The control means also comprises machine controllers (not shown in Figure 1) in the pump and motor which generate valve control signals responsive to requested displacement from the transmission controller. Nevertheless, one skilled in the art will appreciate that the control means can be implemented as a plurality of distributed computing devices, each of which may implement parts of the overall control functionality, or as a single device.

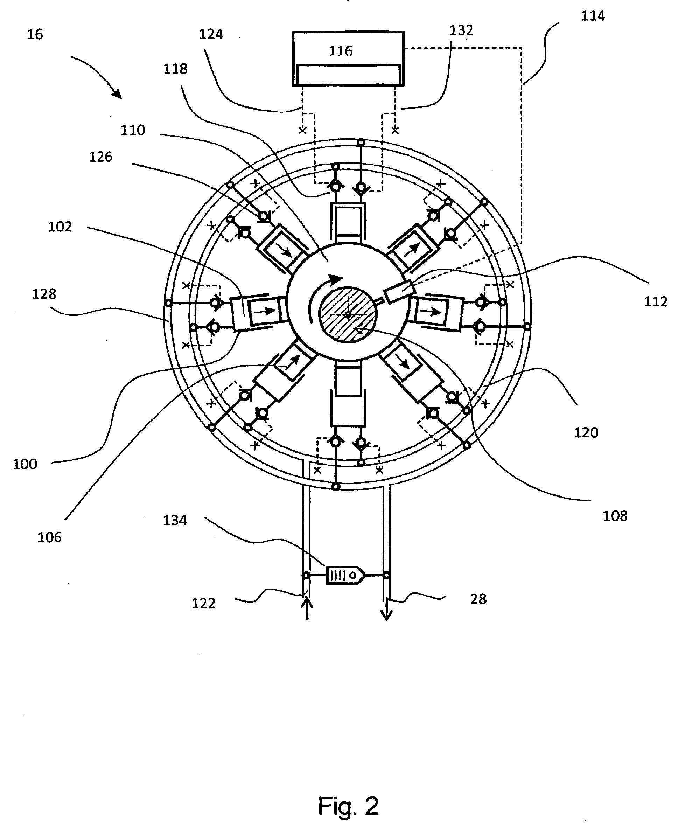

Figure 2 illustrates the hydraulic pump 16 in the form of an electronically commutated fluid working machine comprising a plurality of cylinders 100 which have working volumes 102 defined by the interior surfaces of the cylinders and pistons 106 which are driven from a rotatable shaft 108 by an eccentric cam 110 and which reciprocate within the cylinders to cyclically vary the working volume of the cylinders. The rotatable shaft is firmly connected to and rotates with the generator drive shaft 20. A shaft position and speed sensor 112 determines the instantaneous angular position and speed of rotation of the shaft, and through signal line 114 informs the machine controller 116 of the pump, which enables the machine controller to determine the instantaneous phase of the cycles of each cylinder.

The cylinders are each associated with Low Pressure Valves (LPVs) in the form of electronically actuated face-sealing poppet valves 118, which face inwards toward their associated cylinder and are operable to selectively seal off a channel extending from the cylinder to a low pressure working fluid line 120, which may connect one or several cylinders, or indeed all as is shown here, to the low pressure working fluid line 26 of the WTG. The LPVs are normally open solenoid closed valves which open passively when the pressure within the cylinder is less than or equal to the pressure within the low pressure working fluid line, i.e. during an intake stroke, to bring the cylinder into fluid communication with the low pressure working fluid line, but are selectively closable under the active control of the controller via LPV control lines 124 to bring the cylinder out of fluid communication with the low pressure working fluid line. Alternative electronically controllable valves may be employed, such as normally closed solenoid opened valves.

The cylinders are each further associated with High Pressure Valves (HPVs) 126 in the form of pressure actuated delivery valves. The HPVs open outwards from the cylinders and are operable to seal off a channel extending from the cylinder to a high pressure working fluid line 128, which may connect one or several cylinders, or indeed all as is shown here, to the transmission high pressure working fluid line 28. The HPVs function as normally-closed pressure-opening check valves which open passively when the pressure within the cylinder exceeds the pressure within the high pressure working fluid line. The HPVs also function as normally-closed solenoid opened check valves which the controller may selectively hold open via HPV control lines 132 once that HPV is opened by pressure within the associated cylinder. Typically the HPV is not openable by the controller against pressure in the high pressure working fluid line. The HPV may additionally be openable under the control of the controller when there is pressure in the high pressure working fluid line but not in the cylinder, or may be partially openable, for example if the valve is of the type and is operated according to the method disclosed in WO 2008/029073 or WO 2010/029358.

In a normal mode of operation described in, for example, EP 0 361 927, EP 0 494 236, and EP 1 537 333, the pump controller selects the net rate of displacement of fluid to the high pressure working fluid line by the hydraulic pump by actively closing one or more of the LPVs typically near the point of maximum volume in the associated cylinder's cycle, closing the path to the low pressure working fluid line and thereby directing fluid out through the associated HPV on the subsequent contraction stroke.

The motor operates correspondingly except that the motor controller selects the net rate of displacement of fluid from the high pressure working fluid line by the hydraulic motor by actively closing one or more of the LPVs shortly before the point of minimum volume in the associated cylinder's cycle, closing the path to the low pressure working fluid line which causes the fluid in the cylinder to be compressed by the remainder of the contraction stroke. The associated HPV opens when the pressure across it equalises and a small amount of fluid is directed out through the associated HPV. The motor controller then actively holds open the associated HPV, typically until near the maximum volume in the associated cylinder's cycle, admitting fluid from the high pressure working fluid line and applying a torque to the rotatable shaft. In some embodiments, the motor can function alternatively as a pump, where required, in which case the LPV is controlled to follow the pumping procedure described above.

The pump and motor controllers select the number and sequence of LPV closures and HPV openings to produce a flow or create a shaft torque or power to satisfy a selected net rate of displacement. In the pump, the HPVs may be entirely passively operated, and may be check valves. In the motor, the HPVs are actively controlled. The motor controller also actively controls the precise phasing of the closure of the HPVs with respect to the varying cylinder volume and thereby to select the net rate of displacement of fluid from the high pressure to the low pressure working fluid line or vice versa.

Arrows on the ports 122, 28 indicate fluid flow in the pump; in the motor, the flow is reversed. A pressure relief valve 134 may protect the hydraulic pump from damage.

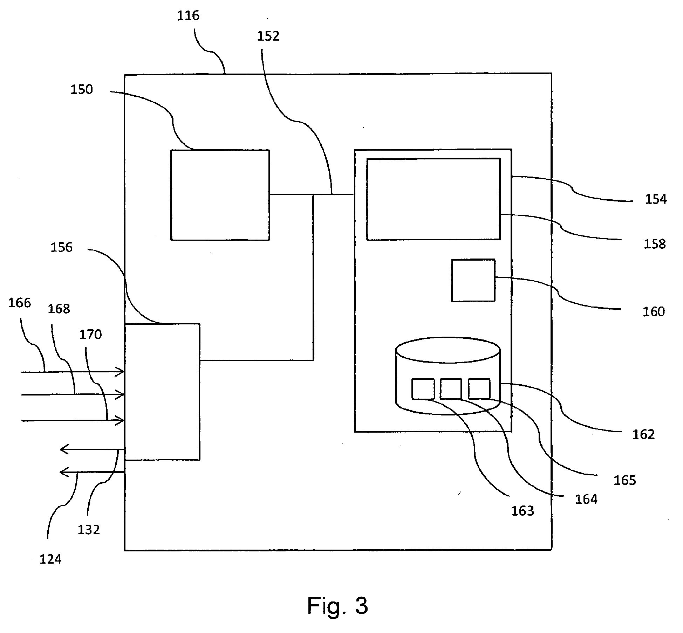

Figure 3 is a schematic diagram of the machine controller 116 of the pump. The structure of the motor controller corresponds. A processor 150, such as a microprocessor or microcontroller, is in electronic communication through a bus 152 with memory 154 and an input-output port 156. The memory stores a program 158 which implements execution of an algorithm to determine the net volume of working fluid to be displaced by each cylinder on each cycle of cylinder working volume, as well as one or more variables 160 which store an accumulated displacement error value and a database 162 which stores data concerning each cylinder, such as the angular position of each cylinder 163 and whether or not it is disabled 164. In some embodiments, the database stores the number of times 165 each cylinder has undergone an active cycle.

The controller receives a displacement demand signal 34, a shaft position (i.e. orientation) signal 166 and typically a measurement of the pressure 168 in the high pressure working fluid line. The outputs from the controller include high pressure valve control signals through high pressure valve control lines 126 and low pressure valve control signals through low pressure valve control lines 118. The controller aims to match the total displacement from the cylinders to the displacement demand signal, over time. The shaft position is required to enable valve control signals to be generated in phased relationship with cycles of cylinder working volume. The speed of rotation of the rotatable shaft can be calculated from the rate of change of shaft position. The measurement of pressure can be used to determine the exact amount of working fluid displaced or in other calculations. The controller might also receive signals indicating whether cylinders are broken, and should therefore be disabled, and to enable the database 162 to be updated accordingly.

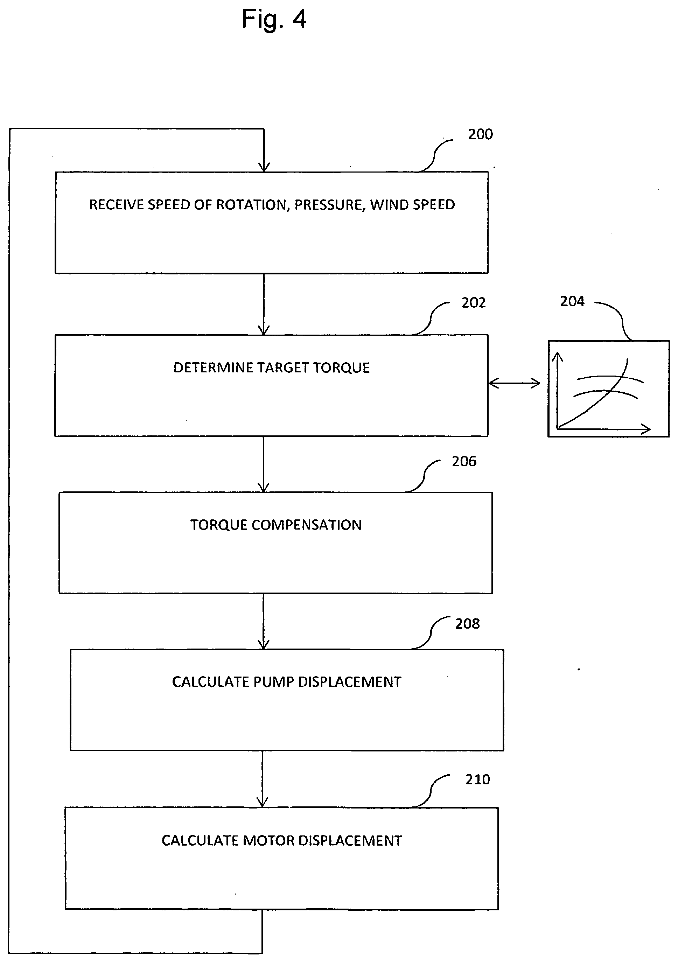

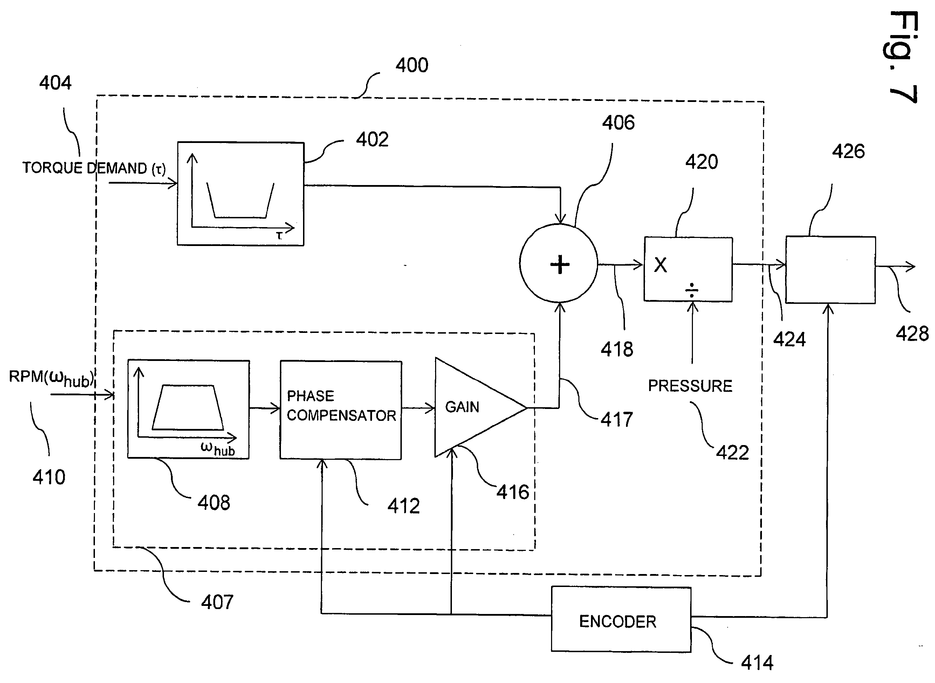

During operation of the hydraulic transmission by the process of Figure 4, the hydraulic transmission controller 30 receives 200 input signals including the speed of rotation of the turbine 2 (which is the same as, or a geared ratio of the speed of rotation of the rotatable shaft of the hydraulic pump, as the two are coupled), and the pressure in the pressurised fluid working fluid line 18, as well as the wind speed. The transmission controller next determines 202 a target torque to be applied to the turbine by the hydraulic pump (the requested demand signal for the hydraulic pump, in this case a torque demand signal), with reference to a look up table 204 which summarises ideal target torque and shaft rotation speed at a plurality of different wind speeds. Once a target torque has been determined the transmission controller then carries out a torque compensation step discussed below with reference to Figure 7 and thereby calculates 206 a compensated torque value. The compensated torque value is used to calculate 208 the pump displacement. Volumes of working fluid and rates of displacement may be calculated in any suitable units. This target displacement can for example be calculated as a fraction of the maximum displacement of which the hydraulic pump is capable. In this example, the displacement is expressed as an average percentage of the maximum output per cylinder. The actual rate of displacement which this represents will be the product of both the average fraction of maximum displacement, the maximum volume which can be displaced by a cylinder, the number of cylinders and the speed of rotation of the pump rotatable shaft. The resulting torque will also be proportional to the pressure in high pressure working fluid line.

Once the pump displacement has been calculated, the motor displacement can also be calculated. Typically, the motor displacement is calculated to generate electricity with optimum efficiency. However, a number of other factors may be taken into account. For example, the motor displacement can be varied in order to vary the pressure in the pressured fluid working fluid line, which increases when motor displacement is less than the displacement by the hydraulic pump, and decreases when the displacement of the hydraulic motor is greater than the displacement of the hydraulic pump. There may be other factors. For example, it may be desirable for the electricity generators to be switched between being driven at a substantially constant torque, and being switched off, to minimise winding losses and maximise the efficiency of electricity generation. Again, this step of calculating the motor displacement may use a compensated torque value, as discussed below with reference to Figure 7.

In some embodiments, the torque compensation step only takes place responsive to detection of an oscillation and, by default, when no oscillation is detected the target torque is used directly to calculate the pump (and/or motor) displacement demand.

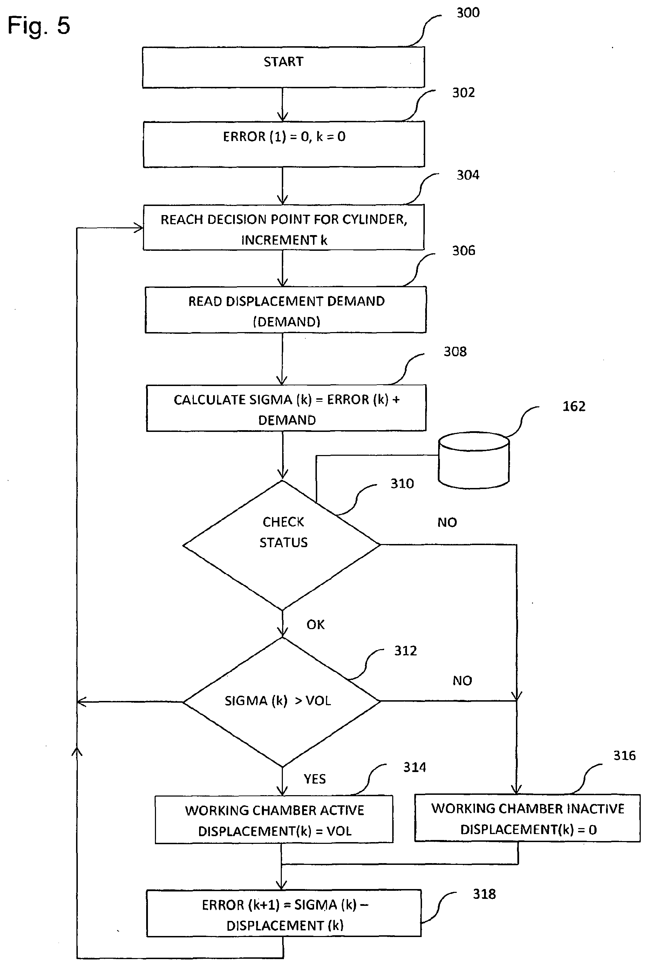

Figure 5 illustrates the procedure carried out by the hydraulic pump to determine the net displacement by each cylinder sequentially. The procedure begins 300, whereupon a stored variable Error (k) (160) is set 302 to zero. The variable Error(k) stores the difference between previous value of the displacement demand (Demand) and previous net displacement determined by the controller (Displacement (k)).

The rotatable shaft of the hydraulic pump then rotates until it reaches 304 a decision point for an individual cylinder and k is increased. For the example shown Figure 2, there are eight cylinders, and so each decision point will be separated by 45 degrees of rotation of the rotatable shaft. The actual period of time which arises between the decision points will therefore be the period of time required for the rotatable shaft to rotate by 45 degrees, which is inversely proportional to the speed of rotation of the rotatable shaft.

At each decision point, the pump controller reads 306 the displacement demand (Demand) received from the transmission controller. The controller then calculates (308) Sigma (k) = Error (k) plus the displacement demand (Demand). Next, the status of the cylinder which is being considered is checked 310. This is carried out with reference to the database 162, 164 of cylinder data. If it is found that the cylinder is disabled (for example because it is broken), no further action is taken for that cylinder. The method then repeats from step 304 once the decision point is reached for the next cylinder.

Alternatively, if it is found that the cylinder has not been disabled, then Sigma (k) is compared 312 with a volume of fluid to be displaced by the cylinder. This value, VOL, may simply be the maximum volume of working fluid displaceable by the cylinder, when the only options being considered are an inactive cycle with no net displacement or a full displacement active cycle in which the maximum displacement of working fluid by the cylinder is selected. However, VOL may in some circumstances be less than this maximum displacement, for example, where it is desired to carry out a partial cycle, in which only part of the maximum displacement of the cylinder is displaced.

If Sigma (k) is greater than VOL then it is determined that cylinder will undergo an active cycle, displacing a volume of working fluid equal to VOL. Alternatively, if Sigma (k) is not greater than VOL then it is determined that cylinder will be inactive on its next cycle of cylinder working volume, and will have a net displacement of zero.

Control signals are then sent to the low and high pressure valves for the cylinder under consideration to cause the cylinder to undergo an active or inactive cycle, as determined.

This step effectively takes into account the displacement demand (Demand), and the difference between previous values of the displacement demand (Demand) and previous net displacements (Displacement (k)) determined by the controller (in this case, in the form of the stored error), and then matches the time averaged net displacement of working fluid by the cylinders to the time averaged displacement represented by the displacement demand (Demand) by causing a cylinder to undergo an active cycle in which it makes a net displacement of working fluid, if Sigma (k) exceeds the volume of a displacement 314. In that case, the value of the displacement error (Error (k)) is set as Sigma (k) minus the displacement by the active cylinder (Displacement (k)).

The value of the displacement error (Error (k)) (160) is then updated, and Error (k+1) is set to Sigma (k) minus the determined displacement (Displacement (k)). The procedure restarts from step 304 when the decision point is reached for the next cylinder (k+1).

It can therefore be seen that the displacement error variable (Error (k)) (160) maintains a record of a difference between the displacement which has been demanded, and the displacement which has actually occurred in suitable units. On each cycle, the demanded displacement is added to the displacement error value, and the actual selected displacement is subtracted. Effectively, an active cycle takes place whenever the displacement error plus the requested displacement demand exceeds a threshold, in this case VOL.

Accordingly, on each execution of the displacement determination algorithm, the displacement error value (Error (k)) is updated by adding the by the displacement demand (Demand) and subtracting the net displacement of working fluid which is determined during execution of the algorithm (Displacement (k)).

In this way, the pump controller stores an accumulated displacement demand error (Error (k) which is updated each time the displacement determination algorithm is executed by adding the displacement demand (Demand), and the displacement determination algorithm takes into account the difference between the accumulated displacement demand and the accumulated displacement by causing there to be active cycles each time Sigma (k) exceeds a threshold.

One skilled in the art will appreciate that the effects of this displacement determination algorithm can be obtained in several ways. For example, rather than subtracting the determined displacement (Displacement (k)) from the displacement error (Error (k)), it would be possible to sum the volume of working fluid which has been demanded (Accumulated Demand (k)), and the volume of working fluid which has been displaced (Accumulated Displacement (k)), over a period of time, and determine the displacement of individual cylinders to keep the two evenly matched, for example by selecting an active cycle every time Accumulated Demand (k) minus Accumulated Displacement (k) exceeded a threshold (VOL).

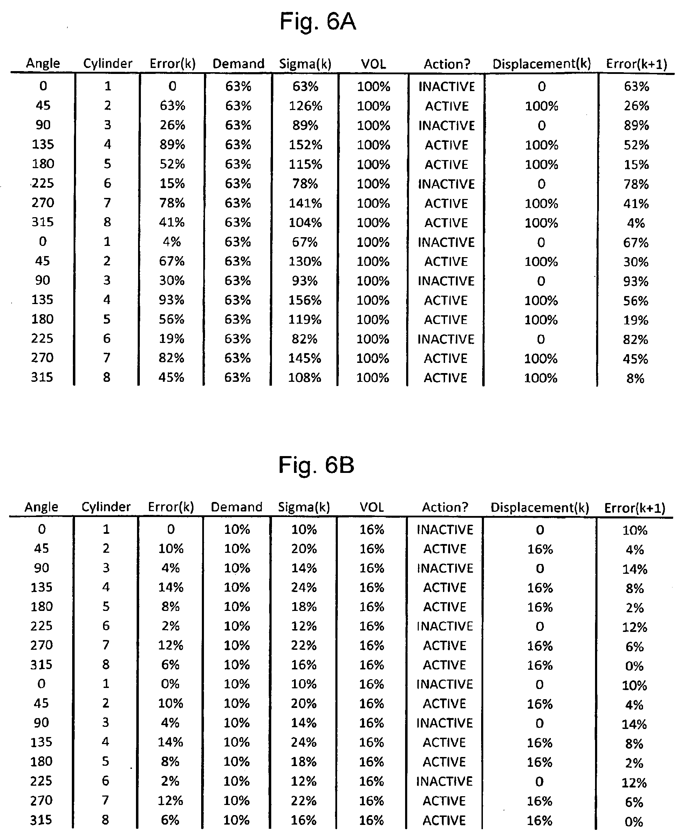

Figure 6A is a table showing an example of the variation in Error (k) and Sigma(k), and the decisions made for each cylinder in an example with eight cylinders equally spaced around a single lobe cam, where all of the active cycles have a displacement equal to the maximum displacement possible by a cylinder, and where there is a constant demand of 63% of the maximum cylinder displacement. Figure 6B is another example, with the demand of 10%, when VOL = 16%, and so the volume displaced by each cylinder during an active cycle is 16% of the maximum available displacement.

We have found that it is difficult to damp oscillations in components which are in mechanical communication with the pump and/or motor. Difficulties arise from the time delays in implementing the specified net displacement of working fluid by the cylinders. These time delays typically arise as the net displacement of working fluid displaced by a cylinder may only be controlled during a limited part or parts of each cycle of cylinder working volume. For example, in a pumping cycle, a decision needs to be made at around bottom dead centre whether to close the low pressure valve and carry out an active cycle with a net displacement of working fluid or to hold the low pressure valve open and carry out an idle cycle with no net displacement of working fluid. Furthermore, they vary with the speed of rotation of the rotatable shaft and the frequency with which the displacement determine algorithm is calculated (which is also proportional to the speed of rotation of the rotatable shaft of the pump, or motor, as appropriate as this determines the time between cylinder selection decisions)

Figure 7 illustrates control logic, for controlling the displacement of the hydraulic pump. The hydraulic motor may be controlled in an analogous way. The control logic comprises a demand compensation module 400 which generates a displacement demand signal, and the pump controller 426 which functions as the valve signal generation module. The control logic is therefore implemented in part by the processor 40 of the transmission controller 32 executing program code stored in data storage 42 and in part by the machine controller of the pump. It will be appreciated by one skilled in the art that some or all of the control logic may alternatively be implemented in the form of electronic circuits.

A torque demand signal 404 (functioning as the requested demand signal) is received as the output from step 202. It is filtered through a band stop filter 402 which supresses one or more bands of frequencies including resonant frequencies of components which are coupled to the pump, for example, resonant frequencies of the blades, the shaft 14, the casing of the pump, the tower and so forth. Generally the band stop filter passes sufficiently low and high frequencies. Supressing very low frequencies can act as a hydraulic brake and the machine will not respond to especially high frequencies. The filtered torque demand signal is passed as an input to summing junction 406. The band stop filter functions as the feedforward filter.

A damping signal generation module 407 is also provided, which calculates a damping torque which is also used to compensate the torque demand signal. In this example, the damping signal is generated by processing the speed of rotation of the turbine (which is the same as the speed of rotation of the rotatable shaft of the pump 410 where there is no gearing between the turbine and pump rotatable shaft) using a feedback filter and so the damping signal generation module is a feedback filter 407. The feedback filter implements a band pass filter 408 and a phase compensator 412 which applies a phase lead, which is frequency dependent, and which varies dependent on the speed of rotation of the rotatable shaft, obtained from a shaft encoder 414. (The shaft encoder may output the speed or rotation of the rotatable shaft, or the speed of rotation may be calculated from the output of the shaft encoder. In this example, where the speed of rotation of the rotatable shaft is filtered using the band pass filter 408, the speed of rotation determined from the shaft encoder is also the signal 410 applies to the band pass filter 408). The feedback filter also comprises an amplifier 416 which applies an appropriate gain, which is dependent on frequency, and the resulting signal (the damping signal 417) is also supplied as an input to summing junction 406. As with the phase compensator, the frequency dependent gain is a function of the speed of rotation of the rotatable shaft.

Although the band pass filter 408, phase compensator 412 and amplifier 416 are shown as three separate functional components through which the received signal is passed in turn, one skilled in the art will appreciate that these individual functions can be implemented in any order or simultaneously, using circuits or program code which implement two or all three of the functions at once.

The speed of rotation of the rotor (or of the pump rotatable shaft) is a suitable signal for feedback filtering to generate the damping signal as it is responsive to oscillations in the speed of rotation of the hub. The signal which is filtered by the feedback filter to generate the damping signal could be an alternative signal which is responsive to oscillations, for example, the pressure in the high pressure working fluid line which could be subject to oscillations.

The output from the summing junction 418, which functions as the compensated torque signal is then used to determine the displacement demand for the pump by dividing the torque which it represents by the pressure 422 in the high pressure working fluid line, using a divider 420, in appropriate units. The output from the divider is the displacement demand signal 424 which is then received as an input by the pump controller 426, functioning as the valve signal generation module. The pump controller applies the algorithm described above with reference to Figures 5, 6A and 6B to generate valve control signals 428 to match the time averaged net displacement of the cylinders of the pump to the displacement represented by the displacement demand signal. The pump controller uses the output from the encoder to ensure that valve control signals are generated in phased relationship to cycles of cylinder working volume. The speed of rotation of the rotatable shaft (determined from the output of the encoder) also has to be taken into account by the pump controller as the displacement demand signal obtained by the dividing the compensated torque by the pressure is typically expressed in units which are proportional to volume per second whereas the displacement determination algorithm of Figures 5, 6A and 6B processes a displacement demand signal expressed as a proportion of the maximum volume of displaced working fluid per rotation of the rotatable shaft and so the displacement demand signal expressed in units which are proportional to volume per second required to be divided by the speed of rotation of the rotatable shaft (rotations per second). In some embodiments, the displacement demand signal received by the valve signal generation module has already been converted from units of volume of working fluid per unit time to a fraction of maximum output per rotation of rotatable shaft.

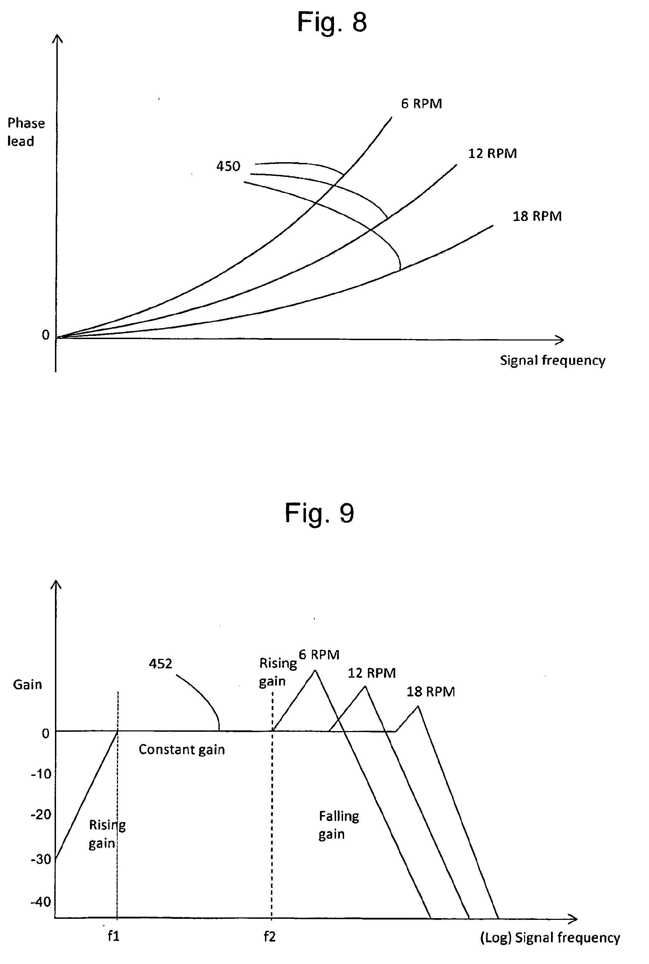

Figure 8 is a graph (not to scale) of the phase lead 450 which should be applied by phase compensator 412 to signals of a range of frequencies, at different speeds of rotation of the rotatable shaft of the pump. Figure 9 is a graph (not to scale) of the variation in gain 452 applied by the amplifier 416 to signals of a range of frequencies, at different speeds of rotation of the rotatable shaft of the pump. It will be seen that the required gain typically has a substantially constant value across a range of frequencies. At lower frequencies it decreases and at frequencies above the range of frequencies at which there is constant gain, the gain increases with frequency to a threshold and then decreases as frequency increases. The frequency of the threshold frequency above which the required gain decreases varies with the speed of rotation.

Accordingly, the actual displacement of working fluid by the pump (and/or the motor) is selectively modified from the displacement which would most accurately deliver the torque represented by the torque demand signal calculated at step 202, to attenuate oscillations. This has been achieved by calculating a compensated torque signal 418 using both feedback and feedforward filters. The phase and amplitude response of the feedforward filter and so the processing of the torque demand signal to obtain the compensated torque signal is a function of the speed of rotation of the rotatable shaft. Therefore, unwanted oscillations arising from the response of the pump (and/or motor) to torque demand signals are attenuated.

In some embodiments, the signal which is responsive to oscillations may be a signal from a sensor which detects movement in a component within which oscillations occur, for example an accelerometer or strain gauge. The oscillating signal may be processed to generate the damping signal. One skilled in the art will also appreciate that the damping signal may be generated using one or more oscillators, the phase, frequency and amplitude of which are controlled to provide the desired compensation by cancelling one or more oscillations detected in the signal responsive to oscilations. Further variations and modifications may be made within the scope of the invention herein disclosed.

### List of Features

- 1: Wind turbine generator
- 2: Nacelle
- 4: Tower
- 6: Turbine
- 8: Blades
- 10: Hydraulic transmission
- 12: Hydraulic variable displacement pump
- 14: Drive shaft
- 16: Hydraulic variable displacement motor
- 18: Electricity generator
- 20: Generator drive shaft
- 22: Contactor
- 24: Tank
- 26: Low pressure working fluid line
- 28: High pressure working fluid line
- 30: Oleo-pneumatic accumulator
- 32: Transmission controller
- 34: Anemometer
- 36: Accelerometer
- 38: Accelerometer
- 40: Processor
- 42: Data storage
- 100: Cylinders
- 102: Cylinder working volume
- 106: Pistons
- 108: Rotatable shaft
- 110: Eccentric cam
- 112: Shaft position and speed sensor
- 114: Signal line
- 116: Machine controller
- 118: Low pressure valves (electronically controlled valves)
- 120: Low pressure conduit
- 122: Low pressure working fluid line
- 124: Low pressure valve control line
- 126: High pressure valves (electronically controlled valves)
- 128: High pressure manifold
- 132: High pressure valve control line
- 134: Pressure relief valve
- 150: Processor
- 152: Bus
- 154: Memory
- 156: Input-output port
- 158: Program
- 160: Variables (including ERROR)
- 162: Database of data concerning each cylinder
- 163: Data concerning angular position of each cylinder
- 164: Data concerning whether each cylinder is disabled
- 165: Data being number of times each cylinder has undergone an active cycle
- 166: Shaft position signal
- 168: Measurement of pressure
- 170: Displacement demand signal
- 200: Step of receiving input signals
- 202: Step of determining target torque
- 204: Torque look up table
- 206: Step of calculating compensated torque
- 208: Step of calculating pump displacement
- 210: Step of calculating motor displacement
- 220: Calculating frequency components
- 222: Comparing calculated frequency components
- 224: Comparing calculated frequency components with undesirable frequency bands
- 300: Step of procedure beginning
- 302: Step of setting Error (1) to zero
- 304: Step of reaching decision point
- 306: Step of reading request motor displacement
- 308: Step of calculating Sigma (k)
- 310: Step of checking status
- 312: Comparison step
- 314: Step of setting displacement
- 316: Step of setting displacement to zero
- 318: Step of updating Error (k) to obtain Error (k+1)
- 400: Controllogic
- 402: Band stop filter
- 404: Torque demand input receiving torque demand signal (functioning as requested demand input receiving requested demand signal)
- 406: Summing junction
- 407: Feedback filter / damping signal generation module
- 408: Band pass filter
- 410: Speed of rotation of hub
- 412: Phase compensator
- 414: Shaft encoder
- 416: Amplifier
- 418: Compensated torque signal
- 420: Divider
- 422: Pressure
- 424: Displacement demand signal
- 426: Pump controller (valve signal generation module)
- 428: Valve control signals
- 450: Phase lead (positive or negative)
- 452: Gain

## Claims

1. A hydraulic transmission (10), comprising:
a variable displacement hydraulic pump (12),
a variable displacement hydraulic motor (16),
a drive shaft (14) coupled to the hydraulic pump (12), for driving the hydraulic pump (12), and
an output shaft (20) coupled to the hydraulic motor (16), for coupling to a load (18),
wherein at least one of the hydraulic pump (12) and the hydraulic motor (16) comprises:
a rotatable shaft (108),
a shaft sensor (112) which measures the position or speed of rotation of the rotatable shaft (108),
at least one cam(110) having at least one lobe,
a plurality of cylinders (100) having working volumes (102) which vary cyclically with rotation of the rotatable shaft (108),
a low pressure working fluid line (26) and a high pressure working fluid line (28),
a plurality of valves (118, 126) regulating the flow of working fluid between each cylinder and the low and high pressure working fluid lines (26, 28), at least one said valve associated with each cylinder being an electronically controlled valve (118), and wherein the hydraulic transmission (10) comprises control means (116),
the control means (116) comprising:
a demand compensation module having a requested demand input (404) receiving a requested demand signal (170) and outputting a displacement demand signal (424); and
a valve signal generation module (426) having a displacement demand input receiving the displacement demand signal (424) from the demand compensation module and configured to generate command signals (428) to actively control the said electronically controlled valves (118) to thereby determine the net displacement of working fluid by each cylinder (100) on each cycle of cylinder volume and cause the time averaged net displacement to match the demand indicated by the displacement demand signal (424),
**characterised in that** the control means further comprises
a damping signal generation module (407) configured to calculate a damping signal (417) calculated to damp one or more oscillations;
wherein the demand compensation module processes the requested demand signal (404) and the damping signal (417) to calculate the displacement demand signal (424); and
wherein the damping signal generation module calculates the damping signal (417) taking into account the frequency of the one or more oscillations and the speed of rotation of the rotatable shaft (108) to thereby compensate for variations in the amplitude and phase of the response of the net displacement by the said cylinders to the displacement demand signal (424) with the frequency of the one or more oscillations and the speed of rotation (410) of the rotatable shaft (408).

2. A hydraulic transmission (10) according to claim 1, wherein the received demand signal (170) is a torque signal, the damping signal (417) is a damping torque signal and the torque represented by damping signal is added to a torque value obtained by processing the received demand signal to calculate a compensated torque signal (418).

3. A hydraulic transmission (10) according to claim 2, wherein the demand compensation module receives a pressure signal (422) indicative of the pressure in the high pressure working fluid line (128), and the demand compensation module processes the compensated torque signal (418) and the pressure signal (422) to determine the displacement demand signal (424).

4. A hydraulic transmission (10) according to claim 1, wherein the demand compensation module processes the received demand signal (170) to calculate the displacement demand signal (424) using a feedforward filter (402).

5. A hydraulic transmission (10) according to claim 4, wherein the feedforward filter (402) attenuates components of one or more signals within one or more frequency bands.

6. A hydraulic transmission (10) according to claim 1, wherein the processing of the received demand signal (170) which depends on the speed of rotation (410) of the rotatable shaft (408) takes into account the variation in the delay between a change in the displacement demand signal (424) and the resulting displacement of working fluid by the said at least one of the hydraulic pump (12) and the hydraulic motor (16) with the speed of rotation (410) of the rotatable shaft (408).

7. A hydraulic transmission (10) according to claim 6, wherein the processing of the received demand signal (170) which depends on the speed of rotation (410) of the rotatable shaft (408) further takes into account the variation in the magnitude of the torque response of the at least one of the hydraulic pump (12) and the hydraulic motor (16) to a given change in displacement demand signal (424), with speed of rotation (410) of the rotatable shaft (408) and/or the pressure represented by the pressure signal (422).

8. A hydraulic transmission (10) according to claim 1, wherein the demand compensation module filters a signal (410) which is responsive to one or more of the said oscillations to generate the damping signal (417).

9. A hydraulic transmission (10) according to claim 8, wherein processing the received demand signal (404) comprises adding the damping signal (417) to the received demand signal (404) or a signal derived therefrom.

10. A hydraulic transmission (10) according to claim 8, wherein the demand compensation module filters the signal (404) which is responsive to said one or more oscillations using a band pass filter (402).

11. A hydraulic transmission (10) according to claim 8, wherein the demand compensation module filters the signal which is responsive to said one or more oscillations using a filter (408) which has a phase lead which is variable, depending on the speed of rotation (410) of the rotatable shaft (108).

12. A hydraulic transmission (10) according to claim 8, wherein one or more said oscillations are oscillations in a component (6, 8, 18) which is coupled to the rotatable shaft (108) and the signal responsive to the said oscillations is representative of the speed of rotation (410) of the rotatable shaft (108).

13. A hydraulic transmission (10) according to claim 8, wherein one or more said oscillations are oscillations in a component (4, 8) of a machine (1) to which the hydraulic transmission (10) is mounted and the signal responsive to said oscillations is a signal received from a sensor (36, 38) which is sensitive to the said oscillations.

14. A hydraulic transmission (10) according to claim 1, wherein the requested demand (404) signal and the damping signal (417) are processed to calculate the displacement demand signal (424) responsive to detection of one or more oscillations.

15. A wind turbine generator (1) comprising a hydraulic transmission according to claim 1, a wind turbine rotor coupled (6) to the drive shaft (14) of the hydraulic pump (12) and an electricity generator (18) coupled to the output shaft (20) of the hydraulic motor (16).

16. A method of controlling at least one of a hydraulic pump (12) or a hydraulic motor (16) in a hydraulic transmission (10), the hydraulic transmission (10), comprising:
a variable displacement hydraulic pump (12),
a variable displacement hydraulic motor (16),
a drive shaft (14) coupled to the hydraulic pump (12), for driving the hydraulic pump (12), and
an output shaft (20) coupled to the hydraulic motor (16), for coupling to a load (18),
wherein at least one of the hydraulic pump (12) and the hydraulic motor (16) comprises:
a rotatable shaft (108),
a shaft sensor (112) which measures the position or speed of rotation of the rotatable shaft (108),
at least one cam (110) having at least one lobe,
a plurality of cylinders (100) having working volumes (102) which vary cyclically with rotation of the rotatable shaft (108),
a low pressure working fluid line (26) and a high pressure working fluid line (28),
a plurality of valves (118, 126) regulating the flow of working fluid between each cylinder and the low and high pressure working fluid lines (26, 28), at least one said valve associated with each cylinder being an electronically controlled valve (118),
the method comprising:
receiving a requested demand signal (170) and a shaft speed signal (410) indicative of the speed of rotation of the rotatable shaft (108);
calculating a damping signal (417) calculated to damp one or more oscillations;
processing the requested demand signal (170) and the damping signal (417) to calculate a displacement demand signal and
actively controlling the said electronically controlled valves (118) to thereby determine the net displacement of working fluid by each cylinder (100) on each cycle of cylinder volume and cause the time averaged net displacement to match the displacement of working fluid indicated by the displacement demand signal (424),
wherein the damping signal (417) is calculated taking into account the frequency of the one or more oscillations and the speed of rotation (410) of the rotatable shaft (108) to thereby compensate for variations in the amplitude and phase of the response of the net displacement by the said cylinders to the displacement demand signal (424) with the frequency of the one or more oscillations and the speed of rotation (410) of the rotatable shaft (108).

17. A method according to claim 16, wherein the received demand signal (170) is a received torque demand signal, the damping signal (417) is a damping torque signal and the torque represented by damping torque signal is added to a torque value obtained by processing the received torque demand signal to calculate a compensated torque signal (418), and wherein the displacement demand signal (424) is calculated by processing the compensated torque signal (418) and a pressure signal (422) representative of pressure in the high pressure working fluid line (28).

## Patentansprüche

1. Hydraulikgetriebe (10), umfassend:
eine hydraulische Verstellpumpe (12),
einen hydraulischen Verstellmotor (16),
eine mit der hydraulischen Pumpe (12) gekoppelte Antriebswelle (14) zum Antrieb der hydraulischen Pumpe (12) und
eine mit dem hydraulischen Motor (16) gekoppelte Ausgangswelle (20) zum Koppeln mit einer Last (18),
wobei die hydraulische Pumpe (12) und/oder der hydraulische Motor (16) Folgendes umfasst/umfassen:
eine drehbare Welle (108),
einen Wellensensor (112), der die Position oder die Drehzahl der drehbaren Welle (108) misst,
mindestens einen Nocken (110) mit mindestens einer Nase,
mehrere Zylinder (100) mit Arbeitsvolumen (102), die zyklisch mit der Drehung der drehbaren Welle (108) variieren,
eine Niederdruckarbeitsfluidleitung (26) und eine Hochdruckarbeitsfluidleitung (28),
mehrere Ventile (118, 126), die den Arbeitsfluidstrom zwischen jedem Zylinder und der Nieder- und Hochdruckarbeitsfluidleitung (26, 28) regeln, wobei mindestens ein solches jedem Zylinder zugeordnetes Ventil ein elektronisch gesteuertes Ventil (118) ist und wobei das Hydraulikgetriebe (10) ein Steuermittel (116) umfasst,
wobei das Steuermittel (116) Folgendes umfasst:
ein Bedarfsausgleichmodul mit einem Anforderungsbedarfseingang (404), der ein Anforderungsbedarfssignal (170) empfängt und ein Verdrängungsbedarfssignal (424) abgibt; und
ein Ventilsignalerzeugungsmodul (426) mit einem Verdrängungsbedarfseingang, der das Verdrängungsbedarfssignal (424) von dem Bedarfsausgleichmodul empfängt und dazu konfiguriert ist, Befehlssignale (428) zu erzeugen, um die elektronisch gesteuerten Ventile (118) aktiv zu steuern, um dadurch die Nettoverdrängung von Arbeitsfluid durch jeden Zylinder (100) bei jedem Zylindervolumenzyklus zu bestimmen und die zeitgemittelte Nettoverdrängung zu bewirken, um dem durch das Verdrängungsbedarfssignal (424) angezeigten Bedarf zu entsprechen,
**dadurch gekennzeichnet, dass** das Steuermittel ferner
ein Dämpfungssignalerzeugungsmodul (407) umfasst, das dazu konfiguriert ist, ein zum Dämpfen einer oder mehrerer Schwingungen berechnetes Dämpfungssignal (417) zu berechnen;
wobei das Bedarfsausgleichmodul das angeforderte Anforderungsbedarfssignal (404) und das Dämpfungssignal (417) zur Berechnung des Verdrängungsbedarfssignals (424) verarbeitet; und
wobei das Dämpfungssignalerzeugungsmodul das Dämpfungssignal (417) unter Berücksichtigung der Frequenz der einen oder der mehreren Schwingungen und der Drehzahl der drehbaren Welle (108) berechnet, um dadurch Schwankungen der Amplitude und der Phase der Reaktion der Nettoverdrängung durch die Zylinder auf das Verdrängungsbedarfssignal (424) mit der Frequenz der einen oder der mehreren Schwingungen und der Drehzahl (410) der drehbaren Welle (408) auszugleichen.

2. Hydraulikgetriebe (10) nach Anspruch 1, wobei das empfangene Bedarfssignal (170) ein Drehmomentsignal ist, das Dämpfungssignal (417) ein Dämpfungsdrehmomentsignal ist und das durch das Dämpfungssignal repräsentierte Drehmoment zu einem durch Verarbeiten des empfangenen Bedarfssignals erhaltenen Drehmomentwert hinzuaddiert wird, um ein ausgeglichenes Drehmomentsignal (418) zu berechnen.

3. Hydraulikgetriebe (10) nach Anspruch 2, wobei das Bedarfsausgleichmodul ein Drucksignal (422) empfängt, das den Druck in der Hochdruckarbeitsfluidleitung (128) anzeigt, und das Bedarfsausgleichmodul das ausgeglichene Drehmomentsignal (418) und das Drucksignal (422) verarbeitet, um das Verdrängungsbedarfssignal (424) zu bestimmen.

4. Hydraulikgetriebe (10) nach Anspruch 1, wobei das Bedarfsausgleichmodul das empfangene Bedarfssignal (170) verarbeitet, um das Verdrängungsbedarfssignal (424) unter Verwendung eines Feedforward-Filters (402) zu berechnen.

5. Hydraulikgetriebe (10) nach Anspruch 4, wobei der Feedforward-Filter (402) Komponenten eines oder mehrerer Signale in einem oder mehreren Frequenzbändern abschwächt.

6. Hydraulikgetriebe (10) nach Anspruch 1, wobei die Verarbeitung des empfangenen Bedarfssignals (170), das von der Drehzahl (410) der drehbaren Welle (408) abhängt, die Schwankung der Verzögerung zwischen einer Änderung des Verdrängungsbedarfssignals (424) und der sich ergebenden Verdrängung des Arbeitsfluids durch die hydraulische Pumpe (12) und/oder den hydraulischen Motor (16) mit der Drehzahl (410) der drehbaren Welle (408) berücksichtigt.

7. Hydraulikgetriebe (10) nach Anspruch 6, wobei die Verarbeitung des empfangenen Bedarfssignals (170), das von der Drehzahl (410) der drehbaren Welle (408) abhängt, ferner die Schwankung der Höhe der Drehmomentantwort der hydraulischen Pumpe (12) und/oder des hydraulischen Motors (16) auf eine gegebene Änderung des Verdrängungsbedarfssignals (424) mit der Drehzahl (410) der drehbaren Welle (408) und/oder dem durch das Drucksignal (422) repräsentierten Druck berücksichtigt.

8. Hydraulikgetriebe (10) nach Anspruch 1, wobei das Bedarfsausgleichmodul ein Signal (410) filtert, das auf eine oder mehrere der Schwingungen reagiert, um das Dämpfungssignal (417) zu erzeugen.

9. Hydraulikgetriebe (10) nach Anspruch 8, wobei die Verarbeitung des empfangenen Bedarfssignals (404) Addieren des Dämpfungssignals (417) zu dem empfangenen Bedarfssignal (404) oder einem davon abgeleiteten Signal umfasst.

10. Hydraulikgetriebe (10) nach Anspruch 8, wobei das Bedarfsausgleichmodul das Signal (404), das auf die eine oder die mehreren Schwingungen reagiert, unter Verwendung eines Bandpassfilters (402) filtert.

11. Hydraulikgetriebe (10) nach Anspruch 8, wobei das Bedarfsausgleichmodul das Signal, das auf die eine oder die mehreren Schwingungen reagiert, unter Verwendung eines Filters (408), der eine Phasenvoreilung aufweist, die in Abhängigkeit von der Drehzahl (410) der drehbaren Welle (108) variiert, filtert.

12. Hydraulikgetriebe (10) nach Anspruch 8, wobei eine oder mehrere der Schwingungen Schwingungen in einer Komponente (6, 8, 18) sind, die mit der drehbaren Welle (108) gekoppelt ist, und das auf die Schwingungen reagierende Signal die Drehzahl (410) der drehbaren Welle (108) repräsentiert.

13. Hydraulikgetriebe (10) nach Anspruch 8, wobei eine oder mehrere der Schwingungen Schwingungen in einer Komponente (4, 8) einer Maschine (1) sind, an der das Hydraulikgetriebe (10) angebracht ist, und das auf die Schwingungen reagierende Signal ein Signal ist, das von einem Sensor (36, 38) empfangen wird, der auf die Schwingungen reagiert.

14. Hydraulikgetriebe (10) nach Anspruch 1, wobei das Anforderungsbedarfssignal (404) und das Dämpfungssignal (417) zur Berechnung des Verdrängungsbedarfssignals (424) als Reaktion auf die Erkennung einer oder mehrerer Schwingungen verarbeitet werden.

15. Windturbinengenerator (1), der ein Hydraulikgetriebe nach Anspruch 1, einen mit der Antriebswelle (14) der hydraulischen Pumpe (12) gekoppelten Windturbinenrotor und einen mit der Ausgangswelle (20) des hydraulischen Motors (16) gekoppelten Elektrizitätsgenerator (18) umfasst.

16. Verfahren zum Steuern einer hydraulischen Pumpe (12) und/oder eines hydraulischen Motors (16) in einem Hydraulikgetriebe (10), wobei das Hydraulikgetriebe (10) Folgendes umfasst:
eine hydraulische Verstellpumpe (12),
einen hydraulischen Verstellmotor (16),
eine mit der hydraulischen Pumpe (12) gekoppelte Antriebswelle (14) zum Antrieb der hydraulischen Pumpe (12) und
eine mit dem hydraulischen Motor (16) gekoppelte Ausgangswelle (20) zum Koppeln mit einer Last (18),
wobei die hydraulische Pumpe (12) und/oder der hydraulische Motor (16) Folgendes umfasst/umfassen:
eine drehbare Welle (108),
einen Wellensensor (112), der die Position oder die Drehzahl der drehbaren Welle (108) misst,
mindestens einen Nocken (110) mit mindestens einer Nase,
mehrere Zylinder (100) mit Arbeitsvolumen (102), die zyklisch mit der Drehung der drehbaren Welle (108) variieren,
eine Niederdruckarbeitsfluidleitung (26) und eine Hochdruckarbeitsfluidleitung (28),
mehrere Ventile (118, 126), die den Arbeitsfluidstrom zwischen jedem Zylinder und der Nieder- und Hochdruckarbeitsfluidleitung (26, 28) regeln, wobei mindestens ein solches jedem Zylinder zugeordnetes Ventil ein elektronisch gesteuertes Ventil (118) ist,
wobei das Verfahren Folgendes umfasst:
Empfangen eines Anforderungsbedarfssignals (170) und eines Wellendrehzahlsignals (410), das die Drehzahl der drehbaren Welle (108) anzeigt;
Berechnen eines Dämpfungssignals (417), das zum Dämpfen einer oder mehrerer Schwingungen berechnet wird;
Verarbeiten des Anforderungsbedarfssignals (170) und des Dämpfungssignals (417) zum Berechnen eines Verdrängungsbedarfssignals und
aktives Steuern der elektronisch gesteuerten Ventile (118), um dadurch die Nettoverdrängung von Arbeitsfluid durch jeden Zylinder (100) bei jedem Zylindervolumenzyklus zu bestimmen und die zeitgemittelte Nettoverdrängung zu bewirken, um der durch das Verdrängungsbedarfssignal (424) angezeigten Verdrängung von Arbeitsfluid zu entsprechen,
wobei das Dämpfungssignal (417) unter Berücksichtigung der Frequenz der einen oder der mehreren Schwingungen und der Drehzahl (410) der drehbaren Welle (108) berechnet wird, um dadurch Schwankungen der Amplitude und der Phase der Reaktion der Nettoverdrängung durch die Zylinder auf das Verdrängungsbedarfssignal (424) mit der Frequenz der einen oder der mehreren Schwingungen und der Drehzahl (410) der drehbaren Welle (108) auszugleichen.

17. Verfahren nach Anspruch 16, wobei das empfangene Bedarfssignal (170) ein empfangenes Drehmomentbedarfssignal ist, das Dämpfungssignal (417) ein Dämpfungsdrehmomentsignal ist und das durch das Dämpfungsdrehmomentsignal repräsentierte Drehmoment zu einem durch Verarbeiten des empfangenen Drehmomentbedarfssignals erhaltenen Drehmomentwert hinzuaddiert wird, um ein ausgeglichenes Drehmomentsignal (418) zu berechnen, und wobei das Verdrängungsbedarfssignal (424) durch Verarbeiten des ausgeglichenen Drehmomentsignals (418) und eines Drucksignals (422), das Druck in der Hochdruckarbeitsfluidleitung (28) repräsentiert, berechnet wird.

## Revendications

1. Transmission hydraulique (10) comprenant :
une pompe à cylindrée variable hydraulique (12),
un moteur à cylindrée variable hydraulique (16),
un arbre d'entraînement (14) accouplé à la pompe hydraulique (12), destiné à entraîner la pompe hydraulique (12), et
un arbre de sortie (20) accouplé au moteur hydraulique (16), destiné à être accouplé à une charge (18),
la pompe hydraulique (12) et/ou le moteur hydraulique (16) comprenant :
un arbre rotatif (108),
un capteur d'arbre (112) qui mesure la position ou la vitesse de rotation de l'arbre rotatif (108),
au moins une came (110) comportant au moins un bossage,
une pluralité de cylindres (100) comportant des volumes de travail (102) qui varient de manière cyclique avec la rotation de l'arbre rotatif (108),
une conduite de fluide de travail à basse pression (26) et une conduite de fluide de travail à haute pression (28),
une pluralité de valves (118, 126) régulant l'écoulement de fluide de travail entre chaque cylindre et les conduites de fluide de travail à basse et haute pression (26, 28), au moins une dite valve associée à chaque cylindre étant une valve (118) à commande électronique, et la transmission hydraulique (10) comprenant des moyens de commande (116),
les moyens de commande (116) comprenant :
un module de compensation de demande comportant une entrée de demande requise (404) recevant un signal de demande requise (170) et produisant en sortie un signal de demande de déplacement (424) ; et
un module de génération de signal de valve (426) comportant une entrée de demande de déplacement recevant le signal de demande de déplacement (424) provenant du module de compensation de demande et configuré pour générer des signaux de commande (428) pour commander activement lesdites valves (118) à commande électronique de façon à déterminer ainsi le déplacement net de fluide de travail par chaque cylindre (100) à chaque cycle de volume de cylindre et à faire en sorte que le déplacement net moyenné dans le temps corresponde à la demande indiquée par le signal de demande de déplacement (424),
**caractérisée en ce que** les moyens de commande comprennent en outre
un module de génération de signal d'amortissement (407) configuré pour calculer un signal d'amortissement (417) calculé pour amortir une ou plusieurs oscillations ;
le module de compensation de demande traitant le signal de demande requise (404) et le signal d'amortissement (417) afin de calculer le signal de demande de déplacement (424) ; et
le module de génération de signal d'amortissement calculant le signal d'amortissement (417) en prenant en compte la fréquence de la ou des oscillations et la vitesse de rotation de l'arbre rotatif (108) afin de compenser ainsi les variations d'amplitude et de phase de la réponse du déplacement net par lesdits cylindres au signal de demande de déplacement (424) avec la fréquence de la ou des oscillations et la vitesse de rotation (410) de l'arbre rotatif (408).

2. Transmission hydraulique (10) selon la revendication 1, dans laquelle le signal de demande reçu (170) est un signal de couple, le signal d'amortissement (417) est un signal de couple d'amortissement et le couple représenté par le signal d'amortissement est ajouté à une valeur de couple obtenue par traitement du signal de demande reçu afin de calculer un signal de couple compensé (418).

3. Transmission hydraulique (10) selon la revendication 2, dans laquelle le module de compensation de demande reçoit un signal de pression (422) indiquant la pression dans la conduite de fluide de travail à haute pression (128), et le module de compensation de demande traite le signal de couple compensé (418) et le signal de pression (422) afin de déterminer le signal de demande de déplacement (424).

4. Transmission hydraulique (10) selon la revendication 1, dans laquelle le module de compensation de demande traite le signal de demande reçu (170) afin de calculer le signal de demande de déplacement (424) au moyen d'un filtre de correction aval (402).

5. Transmission hydraulique (10) selon la revendication 4, dans laquelle le filtre de correction aval (402) atténue des composantes d'un ou plusieurs signaux au sein d'une ou plusieurs bandes de fréquences.

6. Transmission hydraulique (10) selon la revendication 1, dans laquelle le traitement du signal de demande reçu (170) qui dépend de la vitesse de rotation (410) de l'arbre rotatif (408) prend en compte la variation du retard entre une modification du signal de demande de déplacement (424) et le déplacement résultant du fluide de travail par ladite pompe hydraulique (12) et/ou ledit moteur hydraulique (16) avec la vitesse de rotation (410) de l'arbre rotatif (408).

7. Transmission hydraulique (10) selon la revendication 6, dans laquelle le traitement du signal de demande reçu (170) qui dépend de la vitesse de rotation (410) de l'arbre rotatif (408) prend en outre en compte la variation de l'amplitude de la réponse de couple de ladite pompe hydraulique (12) et/ou dudit moteur hydraulique (16) à une modification donnée du signal de demande de déplacement (424), avec la vitesse de rotation (410) de l'arbre rotatif (408) et/ou la pression représentée par le signal de pression (422).

8. Transmission hydraulique (10) selon la revendication 1, dans laquelle le module de compensation de demande filtre un signal (410) qui est réactif à une ou plusieurs desdites oscillations afin de générer le signal d'amortissement (417).

9. Transmission hydraulique (10) selon la revendication 8, dans laquelle le traitement du signal de demande (404) reçu comprend le fait d'ajouter le signal d'amortissement (417) au signal de demande (404) reçu ou à un signal dérivé de celui-ci.

10. Transmission hydraulique (10) selon la revendication 8, dans laquelle le module de compensation de demande filtre le signal (404) qui est réactif à ladite ou auxdites oscillations à l'aide d'un filtre passe-bande (402).

11. Transmission hydraulique (10) selon la revendication 8, dans laquelle le module de compensation de demande filtre le signal qui est réactif à ladite ou auxdites oscillations à l'aide d'un filtre (408) qui présente une avance de phase qui est variable, en fonction de la vitesse de rotation (410) de l'arbre rotatif (108).

12. Transmission hydraulique (10) selon la revendication 8, dans laquelle une ou plusieurs dites oscillations sont des oscillations dans un composant (6, 8, 18) qui est accouplé à l'arbre rotatif (108) et le signal réactif auxdites oscillations est représentatif de la vitesse de rotation (410) de l'arbre rotatif (108).

13. Transmission hydraulique (10) selon la revendication 8, dans laquelle une ou plusieurs dites oscillations sont des oscillations dans un composant (4, 8) d'une machine (1) sur laquelle la transmission hydraulique (10) est montée et le signal réactif auxdites oscillations est un signal reçu d'un capteur (36, 38) qui est sensible auxdites oscillations.

14. Transmission hydraulique (10) selon la revendication 1, dans laquelle le signal de demande requise (404) et le signal d'amortissement (417) sont traités afin de calculer le signal de demande de déplacement (424) réactif à la détection d'une ou plusieurs oscillations.

15. Générateur éolien (1) comprenant une transmission hydraulique selon la revendication 1, un rotor d'éolienne (6) accouplé à l'arbre d'entraînement (14) de la pompe hydraulique (12) et une génératrice d'électricité (18) accouplée à l'arbre de sortie (20) du moteur hydraulique (16).

16. Procédé de commande d'une pompe hydraulique (12) et/ou d'un moteur hydraulique (16) dans une transmission hydraulique (10), la transmission hydraulique (10) comprenant :
une pompe à cylindrée variable hydraulique (12),
un moteur à cylindrée variable hydraulique (16),
un arbre d'entraînement (14) accouplé à la pompe hydraulique (12), destiné à entraîner la pompe hydraulique (12), et
un arbre de sortie (20) accouplé au moteur hydraulique (16), destiné à être accouplé à une charge (18),
la pompe hydraulique (12) et/ou le moteur hydraulique (16) comprenant :
un arbre rotatif (108),
un capteur d'arbre (112) qui mesure la position ou la vitesse de rotation de l'arbre rotatif (108),
au moins une came (110) comportant au moins un bossage,
une pluralité de cylindres (100) comportant des volumes de travail (102) qui varient de manière cyclique avec la rotation de l'arbre rotatif (108),
une conduite de fluide de travail à basse pression (26) et une conduite de fluide de travail à haute pression (28),
une pluralité de valves (118, 126) régulant l'écoulement de fluide de travail entre chaque cylindre et les conduites de fluide de travail à basse et haute pression (26, 28), au moins une dite valve associée à chaque cylindre étant une valve à commande électronique (118),
le procédé comprenant :
recevoir un signal de demande requise (170) et un signal de vitesse d'arbre (410) indiquant la vitesse de rotation de l'arbre rotatif (108) ;
calculer un signal d'amortissement (417) calculé pour amortir une ou plusieurs oscillations ;
traiter le signal de demande requise (170) et le signal d'amortissement (417) afin de calculer un signal de demande de déplacement ; et
commander activement lesdites valves (118) à commande électronique de façon à déterminer ainsi le déplacement net de fluide de travail par chaque cylindre (100) à chaque cycle de volume de cylindre et à faire en sorte que le déplacement net moyenné dans le temps corresponde au déplacement de fluide de travail indiqué par le signal de demande de déplacement (424),
dans lequel le signal d'amortissement (417) est calculé en prenant en compte la fréquence de la ou des oscillations et la vitesse de rotation (410) de l'arbre rotatif (108) afin de compenser ainsi les variations d'amplitude et de phase de la réponse du déplacement net par lesdits cylindres au signal de demande de déplacement (424) avec la fréquence de la ou des oscillations et la vitesse de rotation (410) de l'arbre rotatif (108).

17. Procédé selon la revendication 16, dans lequel le signal de demande reçu (170) est un signal de demande de couple reçu, le signal d'amortissement (417) est un signal de couple d'amortissement et le couple représenté par le signal de couple d'amortissement est ajouté à une valeur de couple obtenue par traitement du signal de demande de couple reçu afin de calculer un signal de couple compensé (418), et dans lequel le signal de demande de déplacement (424) est calculé par traitement du signal de couple compensé (418) et d'un signal de pression (422) représentatif de la pression dans la conduite de fluide de travail à haute pression (28).
